# EUROPEAN PATENT APPLICATION

(11) **EP 4 636 690 A1**
(43) Date of publication of application: **22.10.2025**
(21) Application number: 25194392.4
(22) Date of filing: 06.08.2025
(51) Int. Cl.: G06T 7/20, G06N 3/084, G06V 10/82, G06V 20/56

(54) **METHOD AND APPARATUS FOR MOTION STATE ESTIMATION, METHOD AND APPARATUS FOR TRAINING MOTION STATE ESTIMATION MODEL, STORAGE MEDIUM AND ELECTRONIC DEVICE**

(30) Priority: 08.08.2024 CN 202411090120
(71) Applicant: Horizon Journey (Shanghai) Technology Co., Ltd., Shanghai 201306 (CN)
(72) Inventor: XUE, Hui, Shanghai, 201306 (CN); WANG, Ziyang, Shanghai, 201306 (CN)
(74) Representative: Patentanwälte Magenbauer & Kollegen Partnerschaft mbB

(57) **Abstract**

Disclosed are a method and apparatus for motion state estimation, a method and apparatus for training a motion state estimation model, a storage medium and an electronic device, which relate to technical field of intelligent driving. The method includes: determining first distances between an ego vehicle and a target object at a plurality of historical moments and a second distance between the ego vehicle and the target object at a current moment; performing fitting processing on the first distances and the second distance; and processing, based on a motion state estimation model, motion states of the target object at the plurality of historical moments obtained by the performing fitting processing on , to obtain a first estimation motion state of the target object at the current moment and a second estimation motion state of the target object at a future moment.

## Description

### TECHNICAL FIELD

The present disclosure relates to technical field of intelligent driving, in particular, to a method and apparatus for motion state estimation, and a method and apparatus for training a motion state estimation model.

### BACKGROUND

In an intelligent driving system, a vehicle (ego vehicle) in a traveling state typically needs to perceive a dynamic object (where the dynamic object may be referred to as a target object in embodiments of the present disclosure) in a driving environment, so as to make driving decisions based on a motion state of the target object and a motion state of the ego vehicle. If the motion state of the target object cannot be accurately evaluated, then accuracy of decisions is may be directly affected, thereby impacting driving safety. Therefore, how to accurately estimate a motion state of a target object has become an urgent technical problem to be solved.

At present, motion states of a target object at a current moment and a future moment (such as a next moment) are estimated primarily through an explicitly constructed motion model (mathematical model), and are corrected using a Kalman gain to achieve a motion state estimation for the target object.

However, the explicitly constructed motion model corresponds to a fixed motion mode, and a relevant noise matrix needs to be adjusted based on an actual driving environment of the ego vehicle to determine a Kalman gain corresponding to the actual driving environment. Therefore, application scenarios of a solution for motion state estimation as described above are limited, and there are problems of a rather cumbersome and significant time consumption in adjustment of noise matrix.

### SUMMARY

Generally, a motion state of a target object needs to be estimated through a motion model corresponding to a fixed motion mode, and a relevant noise matrix needs to be adjusted based on an actual driving environment of an ego vehicle to determine a Kalman gain corresponding to the actual driving environment. Therefore, scenarios of application are limited, and there is a problem of a rather cumbersome and time consuming noise matrix adjusting process. To solve the above technical problems, the present disclosure provides a method and apparatus for motion state estimation, and a method and apparatus for training a motion state estimation model, capable of solving the problems of limited scenarios of application and a rather cumbersome and time consuming noise matrix adjusting process.

Embodiments of a first aspect of the present disclosure provide a method for motion state estimation, including: determining first distances between an ego vehicle and a target object at a plurality of historical moments; determining, based on perception data of the ego vehicle at a current moment, a second distance between the ego vehicle and the target object at the current moment; performing fitting processing on the first distances and the second distance, to obtain motion states of the target object at the historical moments; and processing, based on a motion state estimation model, the motion states of the target object at the historical moments, to obtain a first estimation motion state of the target object at the current moment and a second estimation motion state of the target object at a future moment.

Embodiments of a second aspect of the present disclosure provide a method for training a motion state estimation model, including: determining a plurality of groups of sample data, where the group of sample data include a first sample distance between an ego vehicle and a target object at a first moment, second sample distances between the ego vehicle and the target object at a plurality of second moments, a first sample motion state ground truth of the target object at the first moment, and a second sample motion state ground truth of the target object at a third moment, where the second moments precede the first moment, and the third moment follows the first moment; performing fitting processing on the first sample distance and the second sample distances in the groups of sample data, to obtain sample motion states of the target object at the second moments; processing, based on an initial motion state estimation model, the sample motion states of the target object at the second moments, to obtain a first predicted motion state of the target object at the first moment and a second predicted motion state of the target object at the third moment; and performing, with the first predicted motion state and the second predicted motion state as an initial training output of the initial motion state estimation model and with the first sample motion state ground truth and the second sample motion state ground truth as supervision information, iterative training on the initial motion state estimation model to obtain a motion state estimation model on which training is completed.

Embodiments of a third aspect of the present disclosure provide an apparatus for motion state estimation, including: a first determination module, configured for determining first distances between an ego vehicle and a target object at a plurality of historical moments; a second determination module, configured for determining, based on perception data of the ego vehicle at a current moment, a second distance between the ego vehicle and the target object at the current moment; a first fitting processing module, configured for performing fitting processing on the first distances and the second distance, to obtain motion states of the target object at the historical moments; and a first motion state estimation module, configured for processing, based on a motion state estimation model, the motion states of the target object at the historical moments, to obtain a first estimation motion state of the target object at the current moment and a second estimation motion state of the target object at a future moment.

Embodiments of a fourth aspect of the present disclosure provide an apparatus for training a motion state estimation model, including: a third determination module, configured for determining a plurality of groups of sample data, where the group of sample data include a first sample distance between an ego vehicle and a target object at a first moment, second sample distances between the ego vehicle and the target object at a plurality of second moments, a first sample motion state ground truth of the target object at the first moment, and a second sample motion state ground truth of the target object at a third moment, where the second moments precede the first moment, and the third moment follows the first moment; a second fitting processing module, configured for performing fitting processing on the first sample distance and the second sample distances in the groups of sample data, to obtain sample motion states of the target object at the second moments; a second motion state estimation module, configured for processing, based on an initial motion state estimation model, the sample motion states of the target object at the second moments, to obtain a first predicted motion state of the target object at the first moment and a second predicted motion state of the target object at the third moment; and a training module, configured for performing, with the first predicted motion state and the second predicted motion state as an initial training output of the initial motion state estimation model and with the first sample motion state ground truth and the second sample motion state ground truth as supervision information, iterative training on the initial motion state estimation model to obtain a motion state estimation model on which training is completed.

Embodiments of a fifth aspect of the present disclosure provide a non-transitory computer readable storage medium, on which a computer program is stored, wherein the computer program, when executed by a processor, to causes the processor to implement the method for motion state estimation according to the first aspect as described above, or the method for training a motion state estimation model according to the second aspect.

Embodiments of a sixth aspect of the present disclosure provide an electronic device, including: a processor; and a memory, configured for storing processor-executable instructions, where the processor is configured for reading the executable instructions from the memory, and executing the instructions to implement the method for motion state estimation according to the first aspect as described above, or the method for training a motion state estimation model according to the second aspect.

Embodiments of a seventh aspect of the present disclosure provide a non-transitory computer program product, where instructions in the computer program product, when executed by a processor, causes the processor to implement the method for motion state estimation according to the first aspect as described above, or the method for training a motion state estimation model according to the second aspect.

With the method for motion state estimation according to embodiments of the present disclosure, motion states of a target object at a current moment and a future moment are estimated through motion states of the target object at historical moments using a motion state estimation model, where it is not required to evaluate a motion state of the target object through a motion model corresponding to a fixed motion mode, which therefore is not limited by a motion mode corresponding to a motion model, making application scenarios more extensive. Moreover, as motion state correction using the Kalman gain is not required, it is also not required to adjust the relevant noise matrix based on an actual driving environment of the ego vehicle, thereby reducing the time required for motion state estimation and saving cost.

### BRIEF DESCRIPTION OF DRAWINGS

By describing embodiments of the present disclosure in more detail in combination with the drawings, the above and other purposes, features, and vantages of the present disclosure will become clearer. The drawings, constituting a part of the specification, are provided for further understanding of embodiments of the present disclosure, for explaining this application together with embodiments of the present disclosure, without limitation to this application. In the drawings, the same reference signs generally represent identical components or steps.
FIG. 1 is a flowchart of a method for motion state estimation according to embodiments of the present disclosure.
FIG. 2 is a flowchart of another method for motion state estimation according to embodiments of the present disclosure.
FIG. 3 is a flowchart of still another method for motion state estimation according to embodiments of the present disclosure.
FIG. 4 is a flowchart of a method for training a motion state estimation model according to an exemplary embodiment of the present disclosure.
FIG. 5 is a flowchart of another method for training a motion state estimation model according to an exemplary embodiment of the present disclosure.
FIG. 6 is a block diagram illustrating a structure of an apparatus for motion state estimation according to an exemplary embodiment of the present disclosure.
FIG. 7 is a block diagram illustrating a structure of an apparatus for motion state estimation according to an exemplary embodiment of the present disclosure.
FIG. 8 is a block diagram illustrating a structure of another apparatus for motion state estimation according to an exemplary embodiment of the present disclosure.
FIG. 9 is a block diagram illustrating a structure of still another apparatus for motion state estimation according to an exemplary embodiment of the present disclosure.
FIG. 10 is a block diagram illustrating a structure of an apparatus for training a motion state estimation model according to an exemplary embodiment of the present disclosure.
FIG. 11 is a block diagram illustrating a structure of another apparatus for training a motion state estimation model according to an exemplary embodiment of the present disclosure.
FIG. 12 is a block diagram illustrating a structure of still another apparatus for training a motion state estimation model according to an exemplary embodiment of the present disclosure.
FIG. 13 is a block diagram illustrating a structure of still another apparatus for training a motion state estimation model according to an exemplary embodiment of the present disclosure.
FIG. 14 is a block diagram illustrating a structure of an electronic device according to an exemplary embodiment of the present disclosure.

### DETAILED DESCRIPTION OF THE EMBODIMENTS

To explain the present disclosure, exemplary embodiments of the present disclosure are described below with reference to accompanying drawings. Clearly, the embodiments described are merely some, rather than all, of embodiments of the present disclosure. It should be understood that the present disclosure is not limited to the exemplary embodiments.

It should be noted that unless otherwise specified, the scope of the present disclosure is not limited to relative arrangements, numeric expressions, and numerical values of components and steps described in these embodiments.

### Disclosure Overview

In an intelligent driving system, the ego vehicle in an intelligent driving state typically needs to perceive in real time a target (including a static object such as a lane line, a traffic light, a curb, a sidewalk, etc., and a dynamic object (target object) such as a pedestrian, a cyclist, another traveling vehicle, etc.) in a driving environment, to perform driving path planning based on the target. Specifically, the ego vehicle needs to make driving decisions based on a position of a static object and a motion state of a target object, to ensure driving safety. If the ego vehicle cannot accurately estimate a motion state of a target object, then accuracy of decisions is may be directly affected when the ego vehicle makes driving decisions based on the motion state of the target object, thereby impacting driving safety. Therefore, how to accurately estimate a motion state of a target object has become an urgent technical problem to be solved.

At present, a solution for motion state evaluation for a target object primarily includes: constructing a motion model (mathematical model) with a fixed motion mode (such as uniform motion or uniformly accelerated motion); estimating, through the motion model with the fixed motion mode, motion states of the target object at a current moment and a future moment (such as a next moment); and correcting the motion states of the target object at the current moment and the future moment using the Kalman gain determined by a Kalman filtering model, to achieve the motion state estimation for the target object.

However, the driving scenario of the ego vehicle changes in real time, and if a motion mode of a target object in a driving environment of the ego vehicle changes or has nonlinearity such that the motion mode of the target object is not uniform motion or uniformly accelerated motion, that is, when the motion mode of the target object is not correspondence to the fixed motion mode of the motion model, performance of the motion model may drop greatly, such that the motion states of the target object at the current moment and the future moment estimated using the motion model are of great errors, such that the solution for motion state estimation applies to limited scenarios. Meanwhile, when determining the Kalman gain through the Kalman filtering model, a relevant noise matrix needs to be adjusted correspondingly in real time based on an actual driving scenario of the ego vehicle, to ensure that the determined Kalman gain matches the actual scenario. However, a process of adjusting the noise matrix is rather cumbersome and time consuming, which therefore has a problem of the solution being complicated and with a great time cost.

To solve the problems as described above, embodiments of the present disclosure provide a method for motion state estimation, applicable to a scenario of perceiving an environment by a vehicle in an intelligent driving state, or to any other scenario that can be implemented.

With the method for motion state estimation, fitting processing is performed on first distances between the ego vehicle and a target object at a plurality of historical moments and a second distance between the ego vehicle and the target object at a current moment, to obtain motion states of the target object at the plurality of historical moments; and motion states of the target object at the current moment and a future moment are estimated based on the motion states at the plurality of historical moments using a motion state estimation model, to obtain a first estimation motion state of the target object at the current moment and a second estimation motion state of the target object at the future moment. In this way, estimation of a motion state of a target object is not limited by a motion mode corresponding to a motion model, making application scenarios more extensive. Moreover, as motion state correction using the Kalman gain is not required, it is also not required to adjust the relevant noise matrix based on an actual driving environment of the ego vehicle, thereby reducing the time required for motion state estimation and saving cost.

### Exemplary Method

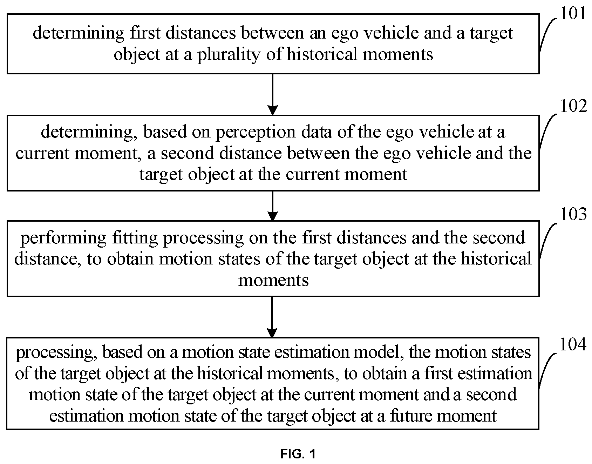

FIG. 1 is a flowchart of a method for motion state estimation according to an exemplary embodiment of the present disclosure. This embodiment is applicable to an electronic device (such as System On Chip, SOC). As shown in FIG. 1, the method includes step 101 to step 104 as follows.

Step 101, Determining first distances between an ego vehicle and a target object at a plurality of historical moments

It may be understood that, in a process of motion state estimation, processes are often performed on inter-frame data, where as an interval (i.e., inter-frame interval) between adjacent moments is very short, a motion state of the ego vehicle within the interval may be viewed as a state of uniform motion, and thereby it is enabled to accurately estimate a motion state of the target object based on a distance between the ego vehicle and the target object within the interval.

Exemplarily, the plurality of historical moments may refer to a plurality of moments before a current moment t. In some examples, the plurality of historical moments may include a plurality of moments arranged sequentially in reverse chronological order. For example, the plurality of historical moments include a first historical moment t-1, a second historical moment t-2, a third historical moment t-3,..., etc., where the first historical moment t-1 is adjacent to the current moment t.

Exemplarily, the target object may be an object in a motion state in a driving environment of the ego vehicle, and may include a walking pedestrian or animal, a traveling vehicle, a cyclist, etc. In some examples, the target object may be a vehicle traveling at a constant speed in a direction opposite to traveling direction of the ego vehicle, or a pedestrian or animal walking at a constant speed in a direction opposite to traveling direction of the ego vehicle. In some other examples, the target object may be a vehicle traveling irregularly in a direction same as the traveling direction of the ego vehicle, or a pedestrian or animal walking irregularly in the direction same as the traveling direction of the ego vehicle. A motion direction and a motion mode of the target object are not limited in embodiments of the present disclosure, where embodiments of the present disclosure are illustrated taking the target object being a vehicle traveling at a constant speed in the traveling direction of the ego vehicle as an example.

Exemplarily, a first distance may refer to a distance between the ego vehicle and the target object at a historical moment in a coordinate system of the ego vehicle, where an origin of the coordinate system of the ego vehicle may be a projection point of a center of a rear axle of the ego vehicle on the ground. In some examples, taking the plurality of historical moments including a first historical moment t-1, a second historical moment t-2, and a third historical moment t-3 as an example, the first distances between the ego vehicle and the target object at the plurality of historical moments may include a plurality of first distances d_{(t-1),} d_{(t-2),} and d₍ₜ₋₃₎.

Exemplarily, an in-vehicle SOC may predetermine the first distances between the ego vehicle and the target object at the plurality of historical moments, and store the first distances between the ego vehicle and the target object at the historical moments into a corresponding memory such as a double data rate synchronous dynamic random-access memory (DDR SDRAM for short). Therefore, at the current moment, the in-vehicle SOC may directly read the first distances between the ego vehicle and the target object at the plurality of historical moments based on a distance reading instruction.

In some examples, a way of determining the first distances between the ego vehicle and the target object at the plurality of historical moments is similar to a way of implementing of step 102 below, specifics of which may refer to step 102 below, which is not described here in embodiments of the present disclosure.

Step 102, Determining, based on perception data of the ego vehicle at a current moment, a second distance between the ego vehicle and the target object at the current moment

Exemplarily, the perception data may include data captured by at least one ranging sensor disposed on the ego vehicle. In some examples, the at least one ranging sensor may include one type of sensor, or a plurality of different types of sensors. For example, at least one in-vehicle ranging sensor may include at least one camera. As another example, an in-vehicle ranging sensor may include at least one of radar (millimeter-wave radar and / or lidar), an ultrasound sensor, and a camera. The type and / or the number of the at least one ranging sensor is not limited in embodiments of the present disclosure, where embodiments of the present disclosure are illustrated taking the at least one ranging sensor including a plurality of cameras as an example.

Exemplarily, similar to a first distance, the second distance may refer to a distance between the ego vehicle and the target object at the current moment in the coordinate system of the ego vehicle.

Exemplarily, taking the at least one ranging sensor including a plurality of cameras as an example, step 102 may include that: receiving and processing, by the in-vehicle SOC, multiple frames of images captured at the current moment by a plurality of cameras, to obtain the second distance d₍ₜ₎ between the ego vehicle and the target object at the current moment t.

In some examples, processing, by the in-vehicle SOC, the multiple frames of images, to obtain the second distance d₍ₜ₎ between the ego vehicle and the target object at the current moment t, may include that: performing, by the in-vehicle SOC, feature extraction and feature fusion processing on data of the multiple frames of images based on a distance extraction model, to obtain the second distance d₍ₜ₎ between the ego vehicle and the target object at the current moment. The distance extraction model may be a trained neural network model configured for distance recognition.

Exemplarily, the ranging sensor may include a plurality of cameras, where an image captured by the cameras at a moment may be referred to as a frame of image. Therefore, a distance directly measured at any moment may be referred to as a frame of ranging data. For example, a plurality of first distances may be referred to as multiple frames of ranging data.

Step 103, Performing fitting processing on the first distances and the second distance, to obtain motion states of the target object at the historical moments

Exemplarily, a motion state of the target object may include at least one of a distance between the target object and the ego vehicle, a motion velocity of the target object, and a motion acceleration of the target object. Taking the plurality of historical moments including a first historical moment t-1, a second historical moment t-2, and a third historical moment t-3 as an example, in some examples, the motion states of the target object at the plurality of historical moments may include a motion state d_{(t-1),} v₍ₜ₋₁₎, and a₍ₜ₋₁₎ of the target object at the first historical moment, a motion state d_{(t-2),} v₍ₜ₋₂₎, and a₍ₜ₋₂₎ of the target object at the second historical moment, and a motion state d_{(t-3),} v₍ₜ₋₃₎, and a₍ₜ₋₃₎ of the target object at the third historical moment_{.}

Exemplarily, the first distances may be a plurality of distances between the ego vehicle and the target object at the plurality of historical moments arranged in chronological order. Taking the plurality of historical moments arranged in chronological order including a fifteenth historical moment t-15, a fourteenth historical moment t-14, a thirteenth historical moment t-13...a fourth historical moment t-4, a third historical moment t-3, a second historical moment t-2, and a first historical moment t-1 as an example, the first distances and the second distance may include16 frames of ranging data, i.e., d₍ₜ₋₁₅₎, d₍ₜ₋₁₄₎, d₍ₜ₋₁₃₎,...d₍ₜ₋₄₎, d₍ₜ₋₃₎, d₍ₜ₋₂₎, d₍ₜ₋₁₎, and d₍ₜ₎.

Exemplarily, step 103 may include: performing linear function fitting processing on the first distances and the second distance by numerical differentiation, to obtain the motion states of the target object at the plurality of historical moments.

Step 104, Processing, based on a motion state estimation model, the motion states of the target object at the historical moments, to obtain a first estimation motion state of the target object at the current moment and a second estimation motion state of the target object at a future moment

Exemplarily, the future moment may include any one moment after the current moment t, or a period of time constituted by a plurality of moments after the current moment t. In some examples, the future moment may include any one of a first future moment t+1, a second future moment t+2, a third future moment t+3, a fourth future moment t+4, and a fifth future moment t+5. For example, the future moment may include the first future moment (the next moment) t+1. In some other examples, the future moment may include a period of time constituted by the first future moment t+1, the second future moment t+2, the third future moment t+3, the fourth future moment t+4, and the fifth future moment t+5. Specific implementation of the future moment is not limited in embodiments of the present disclosure, and embodiments of the present disclosure are illustrated taking the future moment including the next moment t+1 as an example.

Exemplarily, the first estimation motion state may refer to a predicted motion state of the target object at the current moment. In some examples, the first estimation motion state may include a predicted distance d₍ₜ₎ between the target object and the ego vehicle at the current moment, a predicted velocity v(t) of the target object at the current moment, and a predicted acceleration a(t) of the target object at the current moment.

Exemplarily, the second estimation motion state may refer to a predicted motion state of the target object at the future moment. Taking the future moment including the first future moment (the next moment) t+1 as an example, in some examples, the second estimation motion state may include a motion state at the first future moment t+1, that is, the second estimation motion state may include a distance d₍ₜ₊₁₎ between the target object and the ego vehicle at the first future moment t+1, a predicted velocity v₍ₜ₊₁₎ of the target object at the first future moment t+1, and a predicted acceleration a₍ₜ₊₁₎ of the target object at the first future moment t+1_{.}

Taking the future moment including a period of time constituted by the first future moment t+1, the second future moment t+2, and the third future moment t+3 as an example, in some other examples, the second estimation motion state may include motion states at the first future moment to the third future moment. For example, the second estimation motion state may include: the motion state of the target object at the first future moment, comprising the distance d₍ₜ₊₁₎ between the target object and the ego vehicle at the predicted first future moment t+1, and the predicted velocity v₍ₜ₊₁₎ and acceleration a₍ₜ₊₁₎ of the target object at the first future moment t+1; the motion state of the target object at the second future moment, comprising a predicted distance d₍ₜ₊₂₎ between the target object and the ego vehicle at the second future moment t+2, and the predicted velocity v₍ₜ₊₂₎ and acceleration a₍ₜ₊₂₎ of the target object at the second future moment t+2; and the motion state of the target object at the third future moment, comprising a predicted distance d₍ₜ₊₃₎ between the target object and the ego vehicle at the third future moment t+3, and the predicted velocity v₍ₜ₊₃₎ and acceleration a₍ₜ₊₃₎ of the target object at the third future moment t+3.

Exemplarily, the motion state estimation model may be a trained neural network model configured for predicting the motion states of the target object at the current moment and the future moment based on the motion states of the target object at the plurality of historical moments, and may include a plurality of feature sub-networks. In some examples, the plurality of feature sub-networks may be configured for performing feature extraction and feature fusion on the input motion states of the target object at the plurality of historical moments, to accurately predict or estimate the motion state of the target object at the current moment and the motion state of the target object at the future moment.

Exemplarily, step 104 may include: inputting the motion states of the target object at the plurality of historical moments to a trained motion state estimation model, and performing, by the trained motion state estimation model, feature extraction and feature fusion processing on the motion states of the target object at the plurality of historical moments, to output the first estimation motion state of the target object at the current moment and the second estimation motion state of the target object at the future moment.

With the method for motion state estimation according to embodiments of the present disclosure, motion states of a target object at a current moment and a future moment are estimated based on motion states of the target object at historical moments using a motion state estimation model, where it is not required to evaluate a motion state of the target object through a motion model corresponding to a fixed motion mode, which therefore is not limited by a motion mode corresponding to a motion model, making application scenarios more extensive. Moreover, as motion state correction using the Kalman gain is not required, it is also not required to adjust the relevant noise matrix based on an actual driving environment of the ego vehicle, thereby reducing the time required for motion state estimation and saving cost.

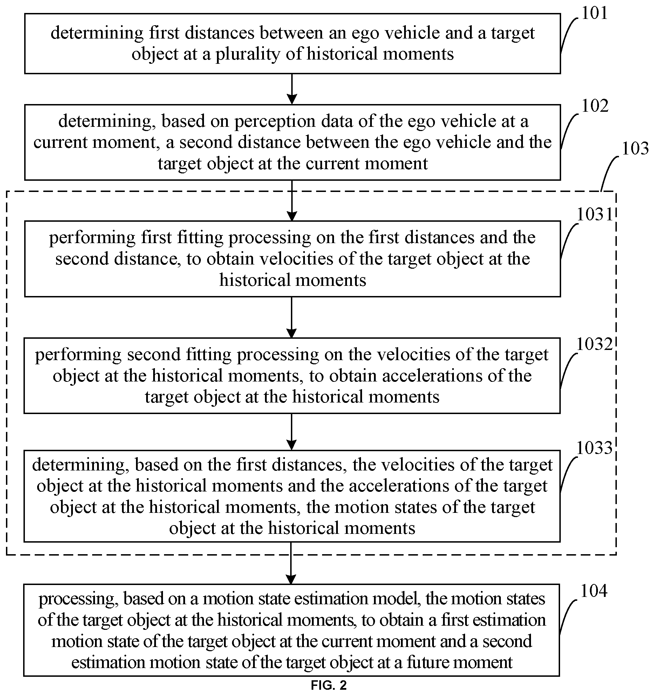

As shown in FIG. 2, based on the embodiment shown in FIG. 1 as described above, in step 103, the performing fitting processing on the first distances and the second distance, to obtain motion states of the target object at the historical moments may include step 1031 to step 1033 as follows.

Step 1031, Performing first fitting processing on the first distances and the second distance, to obtain velocities of the target object at the historical moments

Exemplarily, step 1031 may include: performing linear function fitting on the first distances and the second distance by numerical differentiation, to obtain the velocities of the target object at the historical moments. Numerical differentiation may include any one of forward difference, backward difference, and central difference approaches.

In some examples, the velocities at the historical moments may be determined by numerical differentiation. Take the first distances and the second distance including 16 frames of ranging data, i.e., d₍ₜ₋₁₅₎, d₍ₜ₋₁₄₎, d₍ₜ₋₁₃₎,..., d₍ₜ₋₄₎, d₍ₜ₋₃₎, d₍ₜ₋₂₎, d₍ₜ₋₁₎, and d₍ₜ₎, as an example. If numerical differentiation includes backward difference, then performing first linear function fitting on the first distances and the second distance by numerical differentiation, to obtain the velocities of the target object at the historical moments may include: performing sliding window processing on the16 frames of ranging data d₍ₜ₋₁₅₎, d₍ₜ₋₁₄₎, d₍ₜ₋₁₃₎,..., d₍ₜ₋₄₎, d₍ₜ₋₃₎, d₍ₜ₋₂₎, d_{(t-1),} and d₍ₜ₎, with 2 frames of data being contained per window, where the velocities are estimated by performing fitting processing on 2 frames of ranging data contained by a window at a time, to ultimately obtain 15 frames of velocity data v₍ₜ₋₁₅₎, v₍ₜ₋₁₄₎, v₍ₜ₋₁₃₎,..., v₍ₜ₋₄₎, v₍ₜ₋₃₎, v₍ₜ₋₂₎, and v₍ₜ₋₁₎, i.e., the velocities at the fifteenth historical moment to the first historical moment, where, linear function fitting is performed on d₍ₜ₋₁₅₎ and d₍ₜ₋₁₄₎ to obtain v₍ₜ₋₁₅₎, linear function fitting is performed on d₍ₜ₋₁₄₎ and d₍ₜ₋₁₃₎ to obtain v₍ₜ₋₁₄₎,...and so on, and linear function fitting is performed on d₍ₜ₋₁₎ and d₍ₜ₎ to obtain v₍ₜ₋₁₎.

If numerical differentiation includes central difference, then performing first linear function fitting on the first distances and the second distance by numerical differentiation, to obtain the velocities of the target object at the historical moments may include: performing sliding window processing on the16 frames of ranging data d₍ₜ₋₁₅₎, d₍ₜ₋₁₄₎, d₍ₜ₋₁₃₎,..., d₍ₜ₋₄₎, d₍ₜ₋₃₎, d₍ₜ₋₂₎, d₍ₜ₋₁₎, and d₍ₜ₎, with 3 frames of data being contained per window, where the velocities are estimated by performing fitting processing on 3 frames of data contained by a window at a time, to ultimately obtain 14 frames of velocity data v₍ₜ₋₁₄₎, v₍ₜ₋₁₃₎,..., v₍ₜ₋₄₎, v₍ₜ₋₃₎, v₍ₜ₋₂₎, and v₍ₜ₋₁₎, i.e., the velocities at the fourteenth historical moment to the first historical moment, where, linear function fitting is performed on d₍ₜ₋₁₅₎, d₍ₜ₋₁₄₎, and d₍ₜ₋₁₃₎ to obtain v₍ₜ₋₁₄₎, linear function fitting is performed on d₍ₜ₋₁₄₎, d₍ₜ₋₁₃₎, and d₍ₜ₋₁₂₎ to obtain v_{(t-13),}....and so on, and linear function fitting is performed on d₍ₜ₋₂₎, d_{(t-1),} and d₍ₜ₎ to obtain v₍ₜ₋₁₎.

Specific implementation of data differentiation is not limited in embodiments of the present disclosure, and embodiments of the present disclosure are illustrated taking data differentiation including central difference as an example.

Step 1032, Performing second fitting processing on the velocities of the target object at the historical moments, to obtain accelerations of the target object at the historical moments

Exemplarily, the accelerations at the historical moments may be determined also by numerical differentiation. Take the velocities of the target object at the historical moments including v₍ₜ₋₁₅₎, v₍ₜ₋₁₄₎, v₍ₜ₋₁₃₎,..., v₍ₜ₋₄₎, v₍ₜ₋₃₎, v₍ₜ₋₂₎, and v₍ₜ₋₁₎ as an example. If numerical differentiation includes backward difference, then the accelerations at the historical moments include 14 frames of acceleration data a₍ₜ₋₁₅₎, a₍ₜ₋₁₄₎, a₍ₜ₋₁₃₎,..., a₍ₜ₋₄₎, a₍ₜ₋₃₎, and a₍ₜ₋₂₎; and if numerical differentiation includes central difference, then the accelerations at the historical moments include13 frames of acceleration data a₍ₜ₋₁₄₎, a₍ₜ₋₁₃₎,..., a₍ₜ₋₄₎, a₍ₜ₋₃₎, and a₍ₜ₋₂₎.

Exemplarily, step 1032 may include: performing linear function fitting on the velocities at the plurality of historical moments by numerical differentiation to obtain the accelerations of the target object at the historical moments.

In some examples, a way of performing linear function fitting on the velocities at the plurality of historical moments by numerical differentiation to obtain the accelerations of the target object at the historical moments is similar to a way of performing first linear function fitting on the first distances and the second distance by numerical differentiation to obtain the velocities of the target object at the historical moments, which is not described here.

Step 1033, Determining, based on the first distances, the velocities of the target object at the historical moments and the accelerations of the target object at the historical moments, the motion states of the target object at the historical moments

Exemplarily, step 1033 may include: determining the first distances at respective historical moments, the velocities of the target object at the respective historical moments, and the accelerations of the target object at the respective historical moments to be the motion states at the respective historical moments.

In some examples, it is taken as example that the plurality of historical moments include the fifteenth historical moment t-15, the fourteenth historical moment t-14, the thirteenth historical moment t-13,..., the fourth historical moment t-4, the third historical moment t-3, the second historical moment t-2, and the first historical moment t-1, that the first distances and the second distance include d₍ₜ₋₁₅₎, d₍ₜ₋₁₄₎, d₍ₜ₋₁₃₎,..., d₍ₜ₋₄₎, d₍ₜ₋₃₎, d₍ₜ₋₂₎, d₍ₜ₋₁₎, and d₍ₜ₎, that the velocities at the historical moments include v₍ₜ₋₁₄₎, v₍ₜ₋₁₃₎,..., v₍ₜ₋₄₎, v₍ₜ₋₃₎, v₍ₜ₋₂₎, and v₍ₜ₋₁₎, and that the accelerations at the historical moments include a₍ₜ₋₁₃₎,..., a₍ₜ₋₄₎, a₍ₜ₋₃₎, and a₍ₜ₋₂₎. Determining the first distances at respective historical moments, the velocities of the target object at the respective historical moments, and the accelerations of the target object at the respective historical moments are to be the motion states at the respective historical moments may include: determining d₍ₜ₋₁₅₎ to be the motion state of the target object at the fifteenth historical moment; determining d₍ₜ₋₁₄₎ and v₍ₜ₋₁₄₎ to be the motion state of the target object at the fourteenth historical moment; determining d₍ₜ₋ᵢ₎, v₍ₜ₋ᵢ₎, and a₍ₜ₋ᵢ₎ to be the motion state of the target object at an i-th historical moment, where i is greater than or equal to 2, and less than or equal to 13; and determining d₍ₜ₋₁₎ and v₍ₜ₋₁₎ to be the motion state of the target object at the first historical moment.

With the method for motion state estimation according to embodiments of the present disclosure, accurate velocities of the target object at the historical moments can be obtained by performing first fitting processing on the first distances and the second distance enables to. Moreover, accurate accelerations of the target object at the historical moments can be obtained accurately by performing second fitting processing on the velocities of the target object at the historical moments. Thereby, accurate motion states of the target object at the plurality of historical moments can be obtained based on the first distances, accurate velocities of the target object at the historical moments, and accurate accelerations of the target object at the historical moments. And then, when predicting the motion states of the target object at the current moment and the future moment based on the accurate motion states of the target object at the plurality of historical moments through the motion state estimation model, it is enabled to increase a speed of convergence of the motion state estimation model, and improve performance of the motion state estimation model.

In some embodiments of the present disclosure, the motion state estimation model may include a temporal convolutional network and a motion state estimation network.

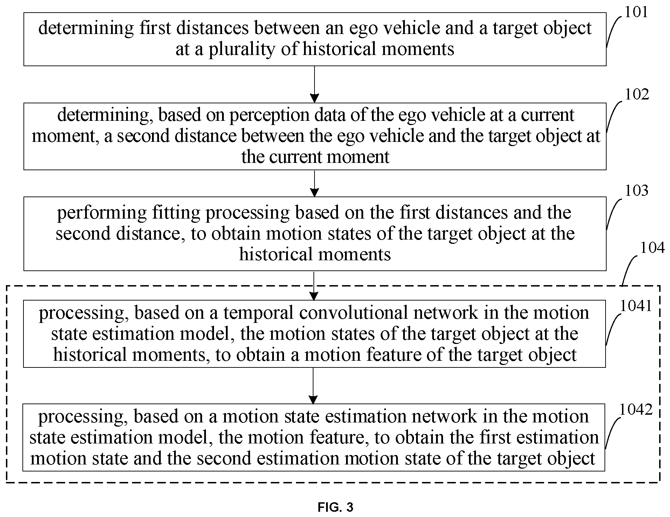

As shown in FIG. 3, based on the embodiment shown in FIG. 1 as described above, in step 104, the processing, based on a motion state estimation model, the motion states of the target object at the historical moments, to obtain a first estimation motion state of the target object at the current moment and a second estimation motion state of the target object at a future moment may include step 1041 and step 1042 as follows.

Step 1041, Processing, based on a temporal convolutional network in the motion state estimation model, the motion states of the target object at the historical moments, to obtain a motion feature of the target object

Exemplarily, the temporal convolutional network may be a one-dimensional convolutional neural network (1D-CNN) corresponding to a temporal convolutional operation. In some examples, the temporal convolutional network may include a plurality of convolutional layers, a pooling layer, and a fully connected layer. Where, the convolutional layer is configured for extracting a feature; the pooling layer is configured for performing dimension reduction on the feature extracted by the convolutional layer, to reduce an amount of computation while improving robustness and generalization ability of the temporal convolutional network; and the fully connected layer is configured for mapping the dimension-reduced feature output from the pooling layer to an output of the temporal convolutional network.

Exemplarily, step 1041 may include: performing feature extraction and smoothing processing on input motion states of the target object at the plurality of historical moments based on the temporal convolutional network in the motion state estimation model, which enables to extract a mode and a trend in the motion states at the plurality of historical moments, and perform smoothing processing on motion features at adjacent historical moments, to reduce an error and fluctuation in motion state estimation, thereby improving continuity and stability of motion state estimation.

Step 1042, Processing, based on a motion state estimation network in the motion state estimation model, the motion feature, to obtain the first estimation motion state and the second estimation motion state of the target object

Exemplarily, the motion state estimation network may be a neural network configured for motion state estimation. In some examples, the motion state estimation network may be a large language neural network model, and may be obtained by transfer learning. For example, the motion state estimation network may be a generative pre-trained transformer (GPT), bidirectional encoder representations from transformers (BERT), or a text-to-text transfer transformer (T5), etc.

Exemplarily, the large language neural network model may include an encoder and / or a decoder. In some examples, as data input to the motion state estimation network are the motion feature obtained by feature extraction, the large language neural network model in embodiments of the present disclosure may include only the decoder.

In some embodiments of the present disclosure, step 1042 may include: processing, based on a decoder in the motion state estimation network, the motion feature, to obtain the first estimation motion state and the second estimation motion state of the target object.

In some examples, the decoder in the motion state estimation network may include a plurality of transformer blocks. The processing, based on a decoder in the motion state estimation network, the motion feature, to obtain the first estimation motion state and the second estimation motion state of the target object may include: performing in-depth extraction, transformation, enhancement, and aggregation on the motion features through technology and method such as a self-attention mechanism, residual connection, layer normalization, etc., in the plurality of transformer blocks, to accurately predict the first estimation motion state and the second estimation motion state of the target object.

With the method for motion state estimation according to embodiments of the present disclosure, the processing, based on a temporal convolutional network in the motion state estimation model, the motion states of the target object at the plurality of historical moments enables to obtain a smoothed motion feature of the target object. Thereby, processing, based on a motion state estimation network in the motion state estimation model, the smoothed motion feature enables to obtain a first estimation motion state and a second estimation motion state of the target object that have less error and less fluctuation, and enables to improve accuracy and stability of the first estimation motion state and the second estimation motion state, as well as continuity between estimated motion states at adjacent moments.

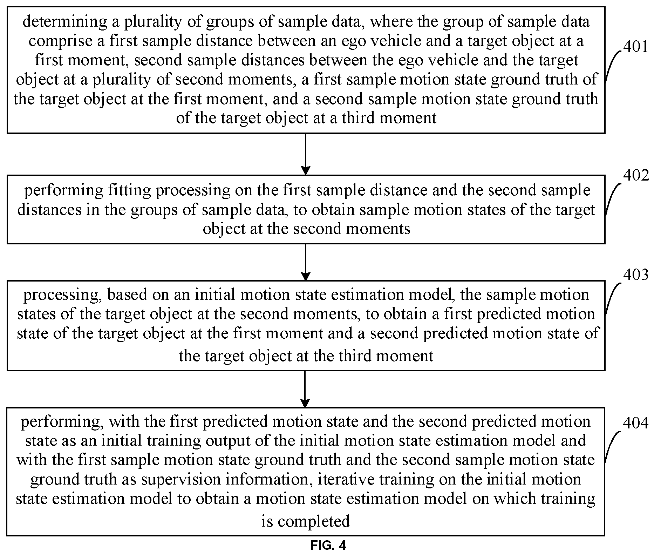

To improve accuracy of prediction by the motion state estimation model, the motion state estimation model (such as a transferred pre-trained model) may be pre-trained, to obtain the motion state estimation model used in a foregoing embodiment. Embodiments of the present disclosure further provide a method for training a motion state estimation model. As shown in FIG. 4, the method includes step 401 to step 404 as follows.

Step 401, Determining a plurality of groups of sample data, where the group of sample data include a first sample distance between an ego vehicle and a target object at a first moment, second sample distances between the ego vehicle and the target object at a plurality of second moments, a first sample motion state ground truth of the target object at the first moment, and a second sample motion state ground truth of the target object at a third moment.

The second moments precede the first moment, and the third moment follows the first moment.

Exemplarily, the plurality of groups of sample data may be a plurality of groups of training data determined based on perception data of at least one vehicle in the intelligent driving state during traveling. The first moment may be any one moment during traveling of the at least one vehicle, and a specific time value for the first moment is not limited in embodiments of the present disclosure. In some examples, the first moment may be denoted by a moment t0. Exemplarily, the second sample distances may refer to a plurality of second sample distances between the ego vehicle and the target object at the plurality of second moments.

Exemplarily, the plurality of second moments may be a plurality of historical moments relative to the first moment, and may include at least two second moments. The specific number of second moments included in the plurality of second moments is not limited in embodiments of the present disclosure. In some examples, the plurality of second moments may include 15 second moments. For example, if the first moment is the moment t0, then the second moments may include moments t0-1, t0-2, t0-3,..., and t0-15.

Exemplarily, the third moment may be a future moment relative to the first moment, and may include one or more future moments. The number of future moments included in the third moment is not limited in embodiments of the present disclosure. Take the first moment being the moment t0 as an example. In some examples, the third moment may include a next moment t0+1 for the first moment, that is, the third moment may include one future moment. In some other examples, the third moment may include a period of time comprising t0+1, t0+2, t0+3, t0+4, t0+5,..., t0+15 after the first moment, that is, the third moment may include 15 future moments.

Exemplarily, the first sample motion state ground truth of the target object at the first moment and the second sample motion state ground truth of the target object at the third moment may correspond to label information for model training.

Exemplarily, the plurality of groups of sample data may be predetermined before training the motion state estimation model.

Step 402, Performing fitting processing on the first sample distance and the second sample distances in the groups of sample data, to obtain sample motion states of the target object at the second moments

Exemplarily, a way of implementing of step 402 is similar to a way of implementing of step 103 in the embodiment shown in FIG. 1, description of which is not repeated here in embodiments of the present disclosure.

Step 403, Processing, based on an initial motion state estimation model, the sample motion states of the target object at the second moments, to obtain a first predicted motion state of the target object at the first moment and a second predicted motion state of the target object at the third moment

Exemplarily, a way of implementing of step 403 is similar to a way of implementing of step 104 in the embodiment shown in FIG. 1, description of which is not repeated here in embodiments of the present disclosure.

Step 404, Performing, with the first predicted motion state and the second predicted motion state as an initial training output of the initial motion state estimation model and with the first sample motion state ground truth and the second sample motion state ground truth as supervision information, iterative training on the initial motion state estimation model to obtain a motion state estimation model on which training is completed

Exemplarily, step 404 may include: determining a loss value based on the first predicted motion state, the second predicted motion state, the first sample motion state ground truth, and the second sample motion state ground truth; then continuously updating a network parameter in the initial motion state estimation model using the loss value until an updated model meets a convergence condition; and determining the model meeting the convergence condition as the motion state estimation model on which training is completed.

Exemplarily, the convergence condition may involve at least one of: the loss value output from the model being less than a first preset value, a change in weights between two adjacent iterations being less than a second preset value, and a number of iterations reaching a preset number. In some examples, both the first preset value and the second preset value may be determined based on a model precision, and magnitudes of the first preset value and the second preset value are not limited in embodiments of the present disclosure.

With the method for training a motion state estimation model according to embodiments of the present disclosure, fitting processing is performed on the first sample distance and the second sample distances in the plurality of groups of sample data, to obtain the sample motion states of the target object at the plurality of second moments; and the sample motion states of the target object at the plurality of second moments are processed based on the initial motion state estimation model, to obtain the first predicted motion state of the target object at the first moment and the second predicted motion state of the target object at the third moment. And then, iterative training are performed on the initial motion state estimation model, with the first predicted motion state and the second predicted motion state as the initial training output of the initial motion state estimation model and with the first sample motion state ground truth and the second sample motion state ground truth in the groups of sample data as the supervision information, to obtain the motion state estimation model on which training is completed. Thereby, the motion state estimation model on which training is completed is enabled to accurate determine the first estimation motion state of the target object at the current moment and the second estimation motion state of the target object at the future moment.

In some embodiments of the present disclosure, step 402 may include: performing third fitting processing on the first sample distance and the second sample distances in the groups of sample data, to obtain sample velocities of the target object at the second moments; performing fourth fitting processing on the sample velocities of the target object at the second moments, to obtain sample accelerations of the target object at the second moments; and determining, based on the second sample distances, the sample velocities of the target object at the second moments, and the sample accelerations of the target object at the second moments, the sample motion states of the target object at the plurality of second moments.

In some embodiments of the present disclosure, step 403 may include: processing, based on an initial temporal convolutional network in the initial motion state estimation model, the sample motion states of the target object at the plurality of second moments, to obtain a predicted motion feature of the target object; and processing, based on an initial motion state estimation network in the initial motion state estimation model, the predicted motion feature, to obtain the first predicted motion state of the target object at the first moment and the second predicted motion state of the target object at the third moment.

In some embodiments of the present disclosure, the processing, based on an initial motion state estimation network in the initial motion state estimation model, the predicted motion feature, to obtain the first predicted motion state of the target object at the first moment and the second predicted motion state of the target object at the third moment may include: processing, based on an initial decoder in the initial motion state estimation network, the predicted motion feature, to obtain the first predicted motion state of the target object at the first moment and the second predicted motion state of the target object at the third moment.

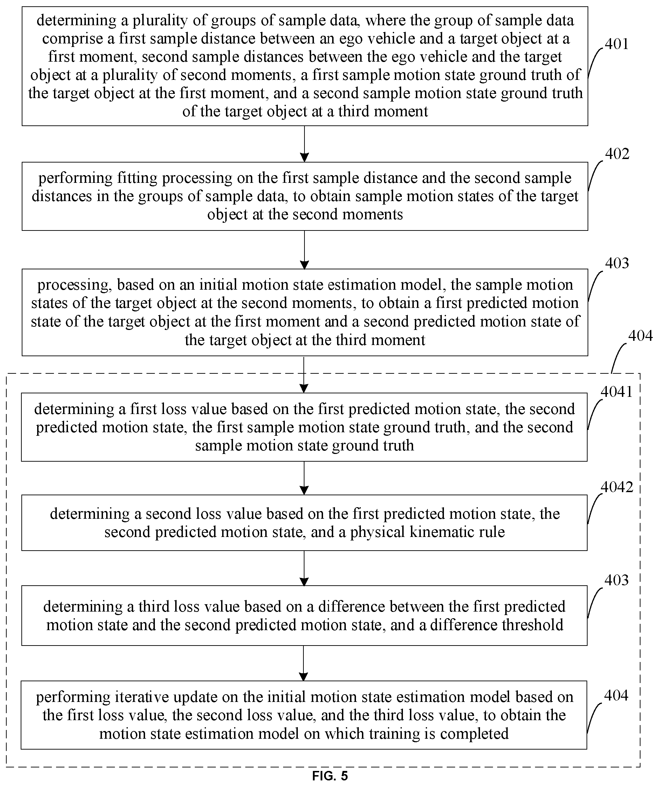

As shown in FIG. 5, based on the embodiment shown in FIG. 4 as described above, step 404 may include step 4041 to step 4044 as follows.

Step 4041, Determining a first loss value based on the first predicted motion state, the second predicted motion state, the first sample motion state ground truth, and the second sample motion state ground truth

Exemplarily, the first loss value may be used for measuring an L2 loss or an error of least squares between motion states pre (predicted motion states) predicted when performing training on the motion state estimation model and a corresponding ground truth (real motion state) gt of sample motion states. In some examples, the first loss value may be determined by seeking a sum of squares of differences between the predicted motion states and the corresponding sample motion state ground truth.

In some embodiments of the present disclosure, step 4041 may include: determining a first sub-loss value based on the first predicted motion state and the first sample motion state ground truth; determining a second sub-loss value based on the second predicted motion state and the second sample motion state ground truth; and determining the first loss value based on the first sub-loss value and the second sub-loss value.

Exemplarily, the first predicted motion state may be denoted by pre1, the second predicted motion state may be denoted by pre2, the first sample motion state ground truth may be denoted by gt1, and the second sample motion state ground truth may be denoted by gt2. The first sub-loss value may represent an error between a predicted motion state of the target object at the first moment and a real motion state of the target object at the first moment, and the second sub-loss value may represent an error between a predicted motion state of the target object at the third moment and a real motion state of the target object at the third moment.

Exemplarily, the determining a first sub-loss value based on the first predicted motion state and the first sample motion state ground truth and the determining a second sub-loss value based on the second predicted motion state and the second sample motion state ground truth may include: computing first differences between first predicted motion states and the first sample motion state ground truth, and determining a sum of squares of the first differences as the first sub-loss value; and computing second differences between second predicted motion states and the second sample motion state ground truth, and determining a sum of squares of the second differences as the second sub-loss value.

In some examples, a first predicted motion state may include a first predicted distance, a first predicted velocity, and a first predicted acceleration; and the first sample motion state ground truth may include a first sample distance ground truth, a first sample velocity ground truth, and a first sample acceleration ground truth. The computing first differences between first predicted motion states and the first sample motion state ground truth, and determining a sum of squares of the first differences as the first sub-loss value may include: computing respectively first distance differences between first predicted distances and the first sample distance ground truth, first velocity differences between first predicted velocities and the first sample velocity ground truth, and first acceleration differences between first predicted accelerations and the first sample acceleration ground truth, and determining the first sub-loss value based on a sum of squares of the first distance differences, a sum of squares of the first velocity differences, and a sum of squares of the first acceleration differences.

Exemplarily, a first predicted distance may include a first x distance in an x-axis direction and a first y distance in a y-axis direction in the coordinate of the ego vehicle; correspondingly, the first sample distance ground truth may include a first x sample distance ground truth in the x-axis direction and a first y sample distance ground truth in the y-axis direction in the coordinate of the ego vehicle. The computing first distance differences between first predicted distances and the first sample distance ground truth may include: computing respectively a first x distance difference between the first x distance and the first x sample distance ground truth and a first y distance difference between the first y distance and the first y sample distance ground truth, and determining the first x distance difference and the first y distance difference to be a first distance difference. Correspondingly, the sum of squares of the first distance differences may include a sum of squares of first x distance differences and a sum of squares of first y distance differences.

In some examples, the x-axis direction in the coordinate system of the ego vehicle may be the traveling direction of the ego vehicle, and the y-axis direction in the coordinate system of the ego vehicle may be perpendicular to the x-axis direction, pointing left (following a right-hand coordinate system rule).

Exemplarily, a first predicted velocity may include a first x velocity in the x-axis direction and a first y velocity in the y-axis direction in the coordinate of the ego vehicle; correspondingly, the first sample velocity ground truth may include a first x sample velocity ground truth in the x-axis direction and a first y sample velocity ground truth in the y-axis direction in the coordinate of the ego vehicle. The computing the first velocity differences between first predicted velocities and the first sample velocity ground truth may include: computing respectively a first x velocity difference between the first x velocity and the first x sample velocity ground truth and a first y velocity difference between the first y velocity and the first y sample velocity ground truth, and determining the first x velocity difference and the first y velocity difference to be a first velocity difference. Correspondingly, the sum of squares of the first velocity differences may include a sum of squares of first x velocity differences and a sum of squares of first y velocity differences.

Exemplarily, a first predicted acceleration may include a first x acceleration in the x-axis direction and a first y acceleration in the y-axis direction in the coordinate of the ego vehicle; correspondingly, the first sample acceleration ground truth may include a first x sample acceleration ground truth in the x-axis direction and a first y sample acceleration ground truth in the y-axis direction in the coordinate of the ego vehicle. The computing the first acceleration differences between the first predicted accelerations and the first sample acceleration ground truth may include: computing respectively a first x acceleration difference between the first x acceleration and the first x sample acceleration ground truth and a first y acceleration difference between the first y acceleration and the first y sample acceleration ground truth, and determining the first x acceleration difference and the first y acceleration difference to be a first acceleration difference. Correspondingly, the sum of squares of the first acceleration differences may include a sum of squares of first x acceleration differences and a sum of squares of first y acceleration differences.

In some examples, the determining the first sub-loss value based on a sum of squares of the first distance differences, a sum of squares of the first velocity differences, and a sum of squares of the first acceleration differences may include: determining, as the first sub-loss value, a sum of the sum of squares of the first distance differences, the sum of squares of the first velocity differences, and the sum of squares of the first acceleration differences.

In some other examples, the determining the first sub-loss value based on a sum of squares of the first distance differences, a sum of squares of the first velocity differences, and a sum of squares of the first acceleration differences may include: determining a first distance weight, a first velocity weight, and a first acceleration weight corresponding respectively to the sum of squares of the first distance differences, the sum of squares of the first velocity differences, and the sum of squares of the first acceleration differences, and determining, as the first sub-loss value, a sum of a product of the first distance weight and the sum of squares of the first distance differences, a product of the first velocity weight and the sum of squares of the first velocity differences, and a product of the first acceleration weight and the sum of squares of the first acceleration differences.

It is taken as an example that the sum of the sum of squares of the first distance differences, the sum of squares of the first velocity differences, and the sum of squares of the first acceleration differences is determined as the first sub-loss value, that is, it is taken as an example that a sum of the sum of squares of the first x distance differences, the sum of squares of the first y distance differences, the sum of squares of the first x velocity differences, the sum of squares of the first y velocity differences, the sum of squares of the first x acceleration differences, and the sum of squares of the first y acceleration differences is determined as the first sub-loss value, which may be determined by a formula (1) below. $Lest = {\sum }_{pre ∈ \left\{dx dy vx vy ax ay\right\}} {\left(pre1-gt1\right)}^{2}$

where Lest denotes the first sub-loss value, dx denotes the first x distance, dy denotes the first y distance; vx denotes the first x velocity, vy the first y velocity; ax denotes the first x acceleration, and ay the first y acceleration.

In some examples, a second predicted motion state may include a second predicted distance, a second predicted velocity, and a second predicted acceleration; and the second sample motion state ground truth may include a second sample distance ground truth, a second sample velocity ground truth, and a second sample acceleration ground truth. A way of computing second differences between second predicted motion states and the second sample motion state ground truth, and determining a sum of squares of the second differences as the second sub-loss value is similar to a way of computing first differences between first predicted motion states and the first sample motion state ground truth, and determining a sum of squares of the first differences as the first sub-loss value, description of which is not repeated here in embodiments of the present disclosure.

In some examples, the determining the first loss value based on the first sub-loss value and the second sub-loss value may include: determining a sum of the first sub-loss value and the second sub-loss value as the first loss value.

With the method for training a motion state estimation model according to embodiments of the present disclosure, based on the first predicted motion state and the first sample motion state ground truth, it is enabled to determine the error between the predicted motion state and the real motion state of the target object at the first moment; based on the second predicted motion state and the second sample motion state ground truth, it is enabled to determine the error between the predicted motion state and the real motion state of the target object at the third moment. In this way, the motion state estimation model is trained by the error between the predicted motion state and the real motion state of the target object at the first moment as well as the error between the predicted motion state and the real state of the target object at the third moment, enabling to guide optimization of the motion state estimation model in a more accurate direction.

Step 4042, Determining a second loss value based on the first predicted motion state, the second predicted motion state, and a physical kinematic rule

Exemplarily, the physical kinematic rule may be a physical limitation and a physics law, for ensuring rationality of the motion state estimation of the target object, avoiding appearance of a result of estimation that goes against a physics law.

In some embodiments of the present disclosure, step 4042 may include: determining a physical motion state at the third moment based on the first predicted motion state and the physical kinematic rule; and determining the second loss value based on the physical motion state and the second predicted motion state.

Exemplarily, the physical kinematic rule may include a parameter rule for describing at least one motion characteristic in physics. In some examples, the physical kinematic rule may include a distance rule in physics. In some other examples, the physical kinematic rule may include the distance rule in physics and a velocity rule in physics.

Exemplarily, the physical motion state at the third moment may correspond to the physical kinematic rule. In some examples, if the physical kinematic rule includes the distance rule, then the physical motion state at the third moment includes a physical distance at the third moment. In some other examples, if the physical kinematic rule includes the velocity rule, then the physical motion state at the third moment includes a physical velocity at the third moment. Embodiments of the present disclosure are illustrated by taking the physical motion state at the third moment including both the physical distance at the third moment and the physical velocity at the third moment as an example.

Exemplarily, it is taken as an example that the physical motion state at the third moment includes both the physical distance at the third moment and the physical velocity at the third moment. The determining a physical motion state at the third moment based on the first predicted motion state and the physical kinematic rule may include: determining the distance rule and the velocity rule; predicting the physical distance of the target object at the third moment based on the velocity rule as well as the first predicted distance, the first predicted velocity, and the first predicted acceleration in the first predicted motion state; and predicting the physical velocity of the target object at the third moment based on the velocity rule as well as a second predicted velocity and a second predicted acceleration in the first predicted motion state.

In some examples, the physical distance of the target object at the third moment may be computed through a formula (2) below. ${d}_{t + 1} = {d}_{t} + {v}_{t} \times {Δ}_{t} + {a}_{t} \times {{Δ}_{t}}^{2}$
where dₜ₊₁ denotes the physical distance at the third moment, dₜ denotes the first predicted distance, vₜ denotes the first predicted velocity, at denotes the first predicted acceleration, and Δₜ denotes a time step length.

In some examples, the physical velocity of the target object at the third moment may be computed through a formula (3) below. ${v}_{t + 1} = {v}_{t} + {a}_{t} \times {Δ}_{t}$
where vₜ₊₁ denotes the physical velocity at the third moment.

Exemplarily, the second loss value may include a third sub-loss value corresponding to the distance rule and a fourth sub-loss value corresponding to the velocity rule. The determining the second loss value based on the physical motion state and the second predicted motion state may include: determining the third sub-loss value based on the physical distance at the third moment and the second predicted distance; determining the fourth sub-loss value based on the physical velocity at the third moment and the second predicted velocity; and determining the second loss value based on the third sub-loss value and the fourth sub-loss value.

In some examples, the determining the third sub-loss value based on the physical distance at the third moment and the second predicted distance and the determining the fourth sub-loss value based on the physical velocity at the third moment and the second predicted velocity may include: determining a difference between the physical distance at the third moment and the second predicted distance to be the third sub-loss value, and determining a difference between the physical velocity at the third moment and the second predicted velocity to be the fourth sub-loss value.

In some examples, the determining the second loss value based on the third sub-loss value and the fourth sub-loss value may include: determining a sum of the third sub-loss value and the fourth sub-loss value to be the second loss value. In some other examples, the determining the second loss value based on the third sub-loss value and the fourth sub-loss value may include: determining a first loss value weight corresponding to the third sub-loss value and a second loss value weight corresponding to the fourth sub-loss value, and determining the second loss value based on a product of the first loss value weight and the third sub-loss value and a product of the second loss value weight and the fourth sub-loss value.

In some other embodiments of the present disclosure, step 4042 may include: determining a physical motion state at the first moment based on a motion state of the target object at a fourth moment and the physical kinematic rule, and determining the second loss value based on the physical motion state at the first moment and the first predicted motion state.

The fourth moment is a moment of the plurality of second moments that is closest to the first moment.

In some examples, a way of the determining a physical motion state at the first moment based on a motion state of the target object at a fourth moment and the physical kinematic rule, and determining the second loss value based on the physical motion state at the first moment and the first predicted motion state is similar to a way of the determining a physical motion state at the third moment based on the first predicted motion state and the physical kinematic rule; and determining the second loss value based on the physical motion state and the second predicted motion state, description of which is not repeated here in embodiments of the present disclosure.

In yet some other embodiments of the present disclosure, step 4042 may include: determining a physical motion state at the first moment based on a motion state of the target object at a fourth moment and the physical kinematic rule; determining the physical motion state at the third moment based on the first predicted motion state and the physical kinematic rule; determining respectively a first state difference between the physical motion state at the first moment and the first predicted motion state and a second state difference between the physical motion state at the third moment and the second predicted motion state; determining a first state weight corresponding to the first state difference and a second state weight corresponding to the second state difference; and determining the second loss value based on the first state weight, the second state weight, the first state difference, and the second state difference.

With the method for training a motion state estimation model according to embodiments of the present disclosure, as the physical kinematic rule is capable of embodying a law of motion in physics, the physical motion state at the third moment that follows the law of motion can be determined based on the first predictive motion state and the physical motion rule. And then, based on the physical motion state and the second predicted motion state, an error between the second predicted state of the target object at the third moment and the physical motion state at the third moment that follows the law of motion it is enabled to accurately determine, and then in training the motion state estimation model, based on the error, it is enabled to guide optimization of the motion state estimation model in a direction better following a physics law.

Step 4043, Determining a third loss value based on a difference between the first predicted motion state and the second predicted motion state, and a difference threshold

Exemplarily, the difference threshold may be determined based on smoothness requirements of the motion state estimation model. In some examples, the difference threshold may include a distance difference threshold, a velocity difference threshold, and an acceleration difference threshold. Magnitudes of the distance difference threshold, the velocity difference threshold, and the acceleration difference threshold are not limited in embodiments of the present disclosure.

Exemplarily, step 4043 may include: determining a predicted distance difference between the first predicted distance and the second predicted distance, and determining a smooth distance loss based on a distance difference between the predicted distance difference and the distance difference threshold; determining a predicted velocity difference between the first predicted velocity and the second predicted velocity, and determining a smooth velocity loss based on a velocity difference between the predicted velocity difference and the velocity difference threshold; determining a predicted acceleration difference between the first predicted acceleration and the second predicted acceleration, and determining a smooth acceleration loss based on an acceleration difference between the predicted acceleration difference and the acceleration difference threshold; and finally, determining the third loss value based on the smooth distance loss, the smooth velocity loss, and the smooth acceleration loss. And then, during training of the motion state estimation model, the motion state estimation model can be guided, based on the third loss value, to be optimized to be smoother, thereby helping improve stability and continuity of motion state estimation and avoiding drastic change and inconsistency in a result of estimation.

In some examples, the determining a smooth distance loss based on a distance difference between the predicted distance difference and the distance difference threshold may include: determining, as the smooth distance loss, an absolute value or a square of the distance difference between the predicted distance difference and the distance difference threshold. The determining a smooth velocity loss based on a velocity difference between the predicted velocity difference and the velocity difference threshold may include: determining, as the smooth velocity loss, an absolute value or a square of the predicted velocity difference and the velocity difference threshold between the velocity difference. The determining a smooth acceleration loss based on an acceleration difference between the predicted acceleration difference and the acceleration difference threshold may include: determining, as the smooth acceleration loss, an absolute value or a square of the predicted acceleration difference and the acceleration difference threshold between the acceleration difference.

In some examples, the determining the third loss value based on the smooth distance loss, the smooth velocity loss, and the smooth acceleration loss may include: determining a sum of the smooth distance loss, the smooth velocity loss, and the smooth acceleration loss as the third loss value.

In some other examples, the determining the third loss value based on the smooth distance loss, the smooth velocity loss, and the smooth acceleration loss may include: determining a smooth distance weight corresponding to the smooth distance loss, a smooth velocity weight corresponding to the smooth velocity loss, and a smooth acceleration weight corresponding to the smooth acceleration loss, and determining the third loss value based on a product of the smooth distance weight and the smooth distance loss, a product of the smooth velocity weight and the smooth velocity loss, and a product of the smooth acceleration weight and the smooth acceleration loss.

Step 4044, Performing iterative update on the initial motion state estimation model based on the first loss value, the second loss value, and the third loss value, to obtain the motion state estimation model on which training is completed

Exemplarily, step 4044 may include: determining weights corresponding to the first loss value, the second loss value, and the third loss value; and determining a product of any one loss value among the first loss value, the second loss value, and the third loss value and a weight corresponding to the any one loss value as an effective loss value of the any one loss value. Finally, a sum of effective loss values corresponding to the respective loss values may be determined to be a model loss value; and the network parameter in the initial motion state estimation model is updated using the model loss value, until the updated model meets the convergence condition. If the updated model meets the convergence condition, then the motion state estimation model on which training is completed is obtained.

With the method for training a motion state estimation model according to embodiments of the present disclosure, based on the first predicted motion state, the second predicted motion state, the first sample motion state ground truth, and the second sample motion state ground truth, it is enabled to determine respectively the errors between the predicted motion states and the real motion states of the target object at the first moment and at the third moment; based on the first predicted motion state, the second predicted motion state, and the physical kinematic rule, it is enabled to determine an error between the second predicted motion state of the target object at the third moment and a motion state of the target object at the third moment obtained by following the physical rule; based on the difference between the first predicted motion state and the second predicted motion state, and the difference threshold, it is enabled to determine a relation between an error between motion states at adjacent moments and the difference threshold. And then, during training of the motion state estimation model, joint optimization is performed on the motion state estimation model based on the errors between the predicted motion states and the real motion states of the target object at the first moment and at the third moment, the error between the second predicted motion state of the target object at the third moment that is predicted and the motion state of the target object at the third moment obtained by following the physical rule, and the relation between the error between the motion states at the adjacent moments and the difference threshold, which enables to improve accuracy and reliability of motion state estimation.

The method for training a motion state estimation model according to embodiments of the present disclosure is applicable to training of a motion state estimation model used in any one method for motion state estimation as described above.

### Exemplary Apparatus

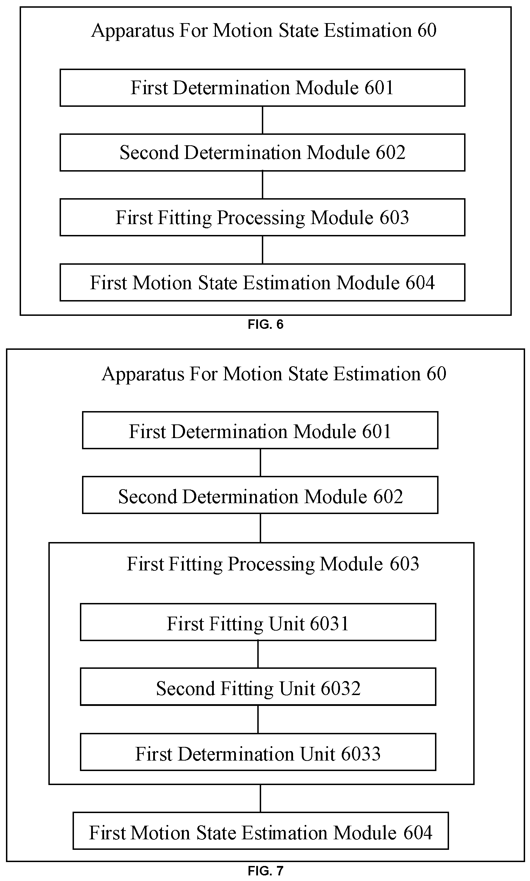

FIG. 6 is a block diagram illustrating a structure of an apparatus for motion state estimation according to an exemplary embodiment of the present disclosure. As shown in FIG. 6, the apparatus 60 for motion state estimation may include: a first determination module 601, a second determination module 602, a first fitting processing module 603, and a first motion state estimation module 604.

The first determination module 601 is configured for determining first distances between an ego vehicle and a target object at a plurality of historical moments.

The second determination module 602 is configured for determining, based on perception data of the ego vehicle at a current moment, a second distance between the ego vehicle and the target object at the current moment.

The first fitting processing module 603 is configured for performing fitting processing on the first distances and the second distance, to obtain motion states of the target object at the historical moments.

The first motion state estimation module 604 is configured for processing, based on a motion state estimation model, the motion states of the target object at the historical moments, to obtain a first estimation motion state of the target object at the current moment and a second estimation motion state of the target object at a future moment.

In some embodiments, as shown in FIG. 7, based on the embodiment shown in FIG. 6 as described above, the first fitting processing module 603 may include a first fitting unit 6031, a second fitting unit 6032, and a first determination unit 6033.

The first fitting unit 6031 is configured for performing first fitting processing on the first distances and the second distance, to obtain velocities of the target object at the historical moments.

The second fitting unit 6032 is configured for performing second fitting processing on the velocities of the target object at the historical moments, to obtain accelerations of the target object at the historical moments.

The first determination unit 6033 is configured for determining, based on the first distances, the velocities of the target object at the historical moments and the accelerations of the target object at the historical moments, the motion states of the target object at the historical moments.

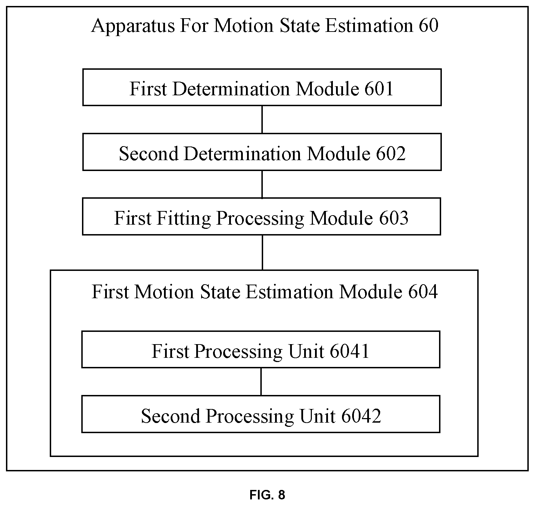

In some embodiments, as shown in FIG. 8, based on the embodiment shown in FIG. 6 as described above, the first motion state estimation module 604 may include a first processing unit 6041 and a second processing unit 6042.

The first processing unit 6041 is configured for processing, based on a temporal convolutional network in the motion state estimation model, the motion states of the target object at the historical moments, to obtain a motion feature of the target object.

The second processing unit 6042 is configured for processing, based on a motion state estimation network in the motion state estimation model, the motion feature, to obtain the first estimation motion state and the second estimation motion state of the target object.

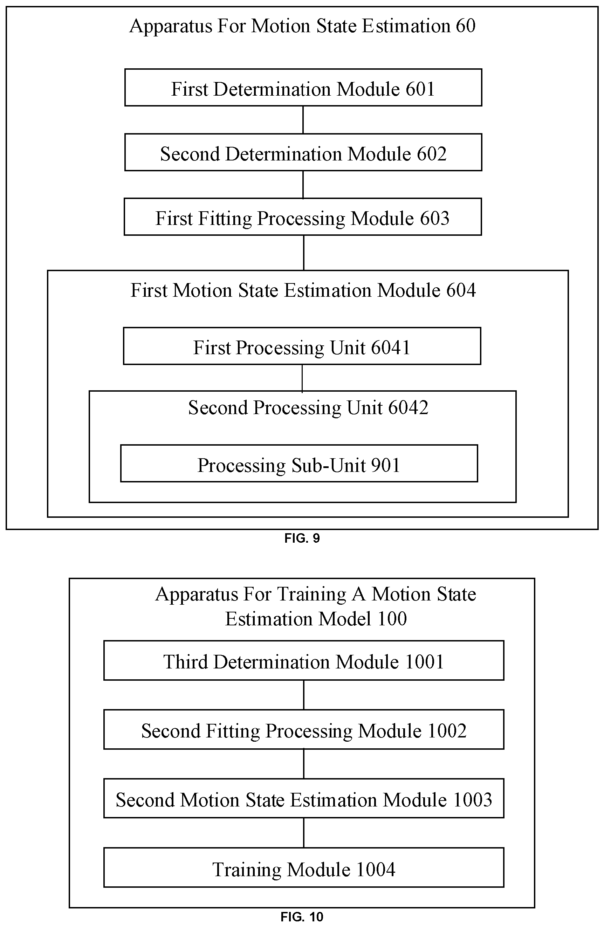

In some embodiments, as shown in FIG. 9, based on the embodiment shown in FIG. 8 as described above, the second processing unit 6042 may include a processing sub-unit 901.

The processing sub-unit 901 is configured for processing, based on a decoder in the motion state estimation network, the motion feature, to obtain the first estimation motion state and the second estimation motion state of the target object.

Specific modes of executing operations by modules in an apparatus for motion state estimation in an embodiment described above and respective beneficial effects thereof have been described in respective embodiment sections in a foregoing section regarding the method for motion state estimation, for which one may refer to respective operation executing modes of the "Exemplary Method " section as described above and beneficial technical effects; and are not described here.

FIG. 10 is a block diagram illustrating a structure of an apparatus for training a motion state estimation model according to an exemplary embodiment of the present disclosure. As shown in FIG. 10, the apparatus 100 for training a motion state estimation model may include: a third determination module 1001, a second fitting processing module 1002, a second motion state estimation module 1003, and a training module 1004.

The third determination module 1001 is configured for determining a plurality of groups of sample data, where the group of sample data include a first sample distance between an ego vehicle and a target object at a first moment, second sample distances between the ego vehicle and the target object at a plurality of second moments, a first sample motion state ground truth of the target object at the first moment, and a second sample motion state ground truth of the target object at a third moment, where the second moments precede the first moment, and the third moment follows the first moment.

The second fitting processing module 1002 is configured for performing fitting processing on the first sample distance and the second sample distances in the groups of sample data, to obtain sample motion states of the target object at the second moments.

The second motion state estimation module 1003 is configured for processing, based on an initial motion state estimation model, the sample motion states of the target object at the second moments, to obtain a first predicted motion state of the target object at the first moment and a second predicted motion state of the target object at the third moment, where the third moment follows the first moment.

The training module 1004 is configured for performing, with the first predicted motion state and the second predicted motion state as an initial training output of the initial motion state estimation model and with the first sample motion state ground truth and the second sample motion state ground truth as supervision information, iterative training on the initial motion state estimation model to obtain a motion state estimation model on which training is completed.

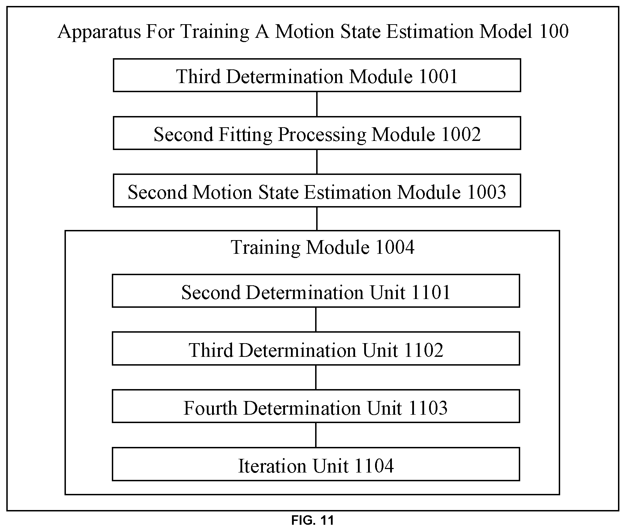

In some embodiments, as shown in FIG. 11, based on the embodiment shown in FIG. 10 as described above, the training module 1004 may include: a second determination unit 1101, a third determination unit 1102, a fourth determination unit 1103, and an iteration unit 1104.

The second determination unit 1101 is configured for determining a first loss value based on the first predicted motion state, the second predicted motion state, the first sample motion state ground truth, and the second sample motion state ground truth.

The third determination unit 1102 is configured for determining a second loss value based on the first predicted motion state, the second predicted motion state, and a physical kinematic rule.

The fourth determination unit 1103 is configured for determining a third loss value based on a difference between the first predicted motion state and the second predicted motion state, and a difference threshold.

The iteration unit 1104 is configured for performing iterative update on the initial motion state estimation model based on the first loss value, the second loss value, and the third loss value, to obtain the motion state estimation model on which training is completed.

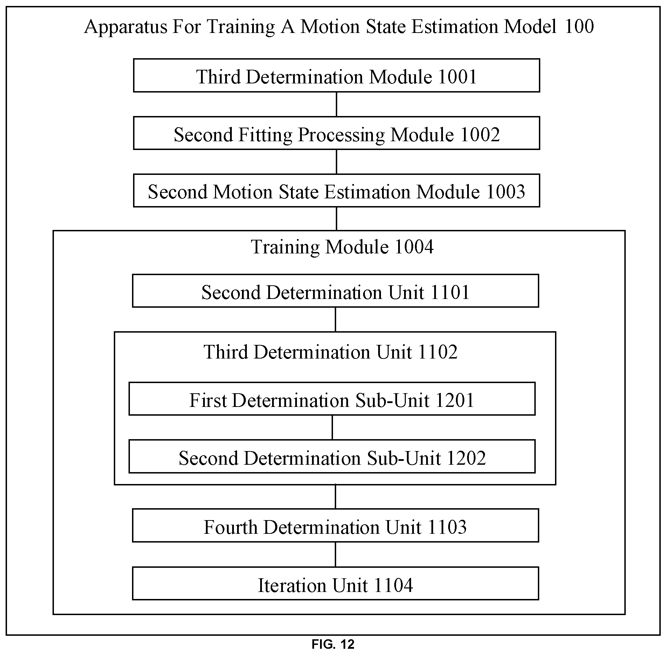

In some embodiments, as shown in FIG. 12, based on the embodiment shown in FIG. 11 as described above, the third determination unit 1102 may include: a first determination sub-unit 1201 and a second determination sub-unit 1202.

The first determination sub-unit 1201 is configured for determining a physical motion state at the third moment based on the first predicted motion state and the physical kinematic rule.

The second determination sub-unit 1202 is configured for determining the second loss value based on the physical motion state and the second predicted motion state.

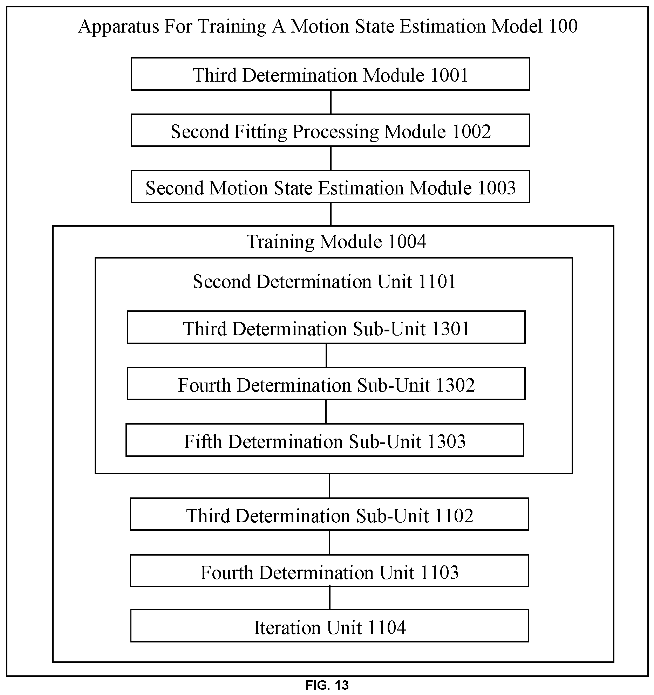

In some embodiments, as shown in FIG. 13, based on the embodiment shown in FIG. 11 as described above, the second determination unit 1101 may include: a third determination sub-unit 1301, a fourth determination sub-unit 1302, and a fifth determination sub-unit 1303.

The third determination sub-unit 1301 is configured for determining a first sub-loss value based on the first predicted motion state and the first sample motion state ground truth.

The fourth determination sub-unit 1302 is configured for determining a second sub-loss value based on the second predicted motion state and the second sample motion state ground truth.

The fifth determination sub-unit 1303 is configured for determining the first loss value based on the first sub-loss value and the second sub-loss value.

Specific modes of executing operations by modules in an apparatus for training a motion state estimation model in an embodiment described above and respective beneficial effects thereof have been described in respective embodiment sections in a foregoing section regarding the method for training a motion state estimation model, for which one may refer to respective operation executing modes of the "Exemplary Method" section as described above and beneficial technical effects; and are not described here.

### Exemplary Electronic Device

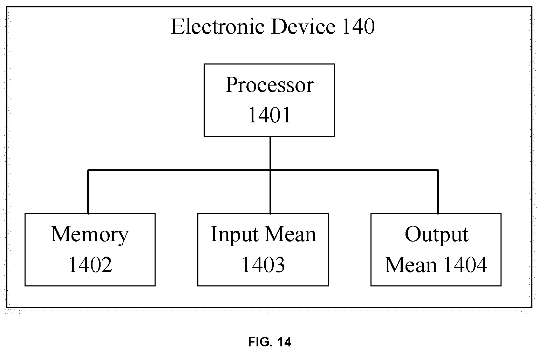

FIG. 14 is a block diagram illustrating a structure of an electronic device according to an exemplary embodiment of the present disclosure. As shown in FIG. 14, the electronic device 140 includes one or more processors 1401 and a memory 1402.

The processor 1401 may be a central processing unit (CPU) or another form of processing unit having a data processing capability and/or an instruction execution capability, and may control other components in the electronic device 140 to implement desired functions.

The memory 1402 may include one or more computer program products, which may include various forms of computer readable storage media, such as a volatile memory and/or a non-volatile memory. The volatile memory may include, for example, random access memory (RAM) and/or cache. The nonvolatile memory may include, for example, read-only memory (ROM), hard disk, and flash memory. One or more computer program instructions may be stored on the computer readable storage medium. The processor 1401 may execute the one or more computer program instructions to implement the method for motion state estimation or the method for training a motion state estimation model according to the various embodiments of the present disclosure that are described above and/or other desired functions.

In an example, the electronic device 140 may further include an input mean 1403 and an output mean 1404. These components are connected to each other through a bus system and/or another form of connection mechanism (not shown).

Certainly, for simplicity, FIG. 14 shows only some of components in the electronic device 140 that are related to the present disclosure, and components such as a bus and an input/output interface are omitted. In addition, according to specific application situations, the electronic device 140 may further include any other appropriate components.

### Exemplary Computer Program Product And Computer Readable Storage Medium

In addition to the foregoing method and device, embodiments of the present disclosure may also provide a computer program product, which includes computer program instructions. When the instructions are run by a processor, the processor is enabled to perform the steps, of the method for motion state estimation or the method for training a motion state estimation model according to the embodiments of the present disclosure, that are described in the "Exemplary Method" section as described above.

The computer program product may be program code, written with one or any combination of a plurality of programming languages, which is configured to perform the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, which stores computer program instructions. When the computer program instructions are run by the processor, the processor is enabled to perform the steps, of the method for motion state estimation or the method for training a motion state estimation model according to the embodiments of the present disclosure, that are described in the "Exemplary Method" section as described above.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection having one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of the present disclosure are described above in combination with specific embodiments. However, advantages, superiorities, effects, etc., mentioned in the present disclosure are merely examples but are not for limitation, and it cannot be considered that these advantages, superiorities, effects, etc., are necessary for each embodiment of the present disclosure. Moreover, specific details described above are merely for examples and for ease of understanding, rather than limitations. The details described above do not limit that the present disclosure must be implemented by using the foregoing specific details.

A person skilled in the art may make various modifications and variations to the present disclosure without departing from the spirit and the scope of this application. In this way, if these modifications and variations of this application fall within the scope of the claims and equivalent technologies of the claims of the present disclosure, the present disclosure also intends to include these modifications and variations.

## Claims

1. A method for motion state estimation, **characterized by** comprising:
determining (101) first distances between an ego vehicle and a target object at a plurality of historical moments;
determining (102), based on perception data of the ego vehicle at a current moment, a second distance between the ego vehicle and the target object at the current moment;
performing (103) fitting processing on the first distances and the second distance, to obtain motion states of the target object at the historical moments; and
processing (104), based on a motion state estimation model, the motion states of the target object at the historical moments, to obtain a first estimation motion state of the target object at the current moment and a second estimation motion state of the target object at a future moment.

2. The method according to claim 1, wherein the performing (103) fitting processing on the first distances and the second distance, to obtain motion states of the target object at the historical moments comprises:
performing (1031) first fitting processing on the first distances and the second distance, to obtain velocities of the target object at the historical moments;
performing (1032) second fitting processing on the velocities of the target object at the historical moments, to obtain accelerations of the target object at the historical moments; and
determining (1033), based on the first distances, the velocities of the target object at the historical moments and the accelerations of the target object at the historical moments, the motion states of the target object at the historical moments.

3. The method according to claim 1 or 2, wherein the processing (104), based on a motion state estimation model, the motion states of the target object at the historical moments, to obtain a first estimation motion state of the target object at the current moment and a second estimation motion state of the target object at a future moment comprises:
processing (1041), based on a temporal convolutional network in the motion state estimation model, the motion states of the target object at the historical moments, to obtain a motion feature of the target object; and
processing (1042), based on a motion state estimation network in the motion state estimation model, the motion feature, to obtain the first estimation motion state and the second estimation motion state of the target object.

4. The method according to claim 3, wherein the processing (1042), based on a motion state estimation network in the motion state estimation model, the motion feature, to obtain the first estimation motion state and the second estimation motion state of the target object comprises:
processing, based on a decoder in the motion state estimation network, the motion feature, to obtain the first estimation motion state and the second estimation motion state of the target object.

5. A method for training a motion state estimation model, **characterized by** comprising:
determining (401) a plurality of groups of sample data, wherein the group of sample data comprise a first sample distance between an ego vehicle and a target object at a first moment, second sample distances between the ego vehicle and the target object at a plurality of second moments, a first sample motion state ground truth of the target object at the first moment, and a second sample motion state ground truth of the target object at a third moment, wherein the second moments precede the first moment, and the third moment follows the first moment;
performing (402) fitting processing on the first sample distance and the second sample distances in the groups of sample data, to obtain sample motion states of the target object at the second moments;
processing (403), based on an initial motion state estimation model, the sample motion states of the target object at the second moments, to obtain a first predicted motion state of the target object at the first moment and a second predicted motion state of the target object at the third moment; and
performing (404), with the first predicted motion state and the second predicted motion state as an initial training output of the initial motion state estimation model and with the first sample motion state ground truth and the second sample motion state ground truth as supervision information, iterative training on the initial motion state estimation model to obtain a motion state estimation model on which training is completed.

6. The method according to claim 5, wherein the performing (404), with the first predicted motion state and the second predicted motion state as an initial training output of the initial motion state estimation model and with the first sample motion state ground truth and the second sample motion state ground truth as supervision information, iterative training on the initial motion state estimation model to obtain a motion state estimation model on which training is completed comprises:
determining (4041) a first loss value based on the first predicted motion state, the second predicted motion state, the first sample motion state ground truth, and the second sample motion state ground truth;
determining (4042) a second loss value based on the first predicted motion state, the second predicted motion state, and a physical kinematic rule;
determining (4043) a third loss value based on a difference between the first predicted motion state and the second predicted motion state, and a difference threshold; and
performing (4044) iterative update on the initial motion state estimation model based on the first loss value, the second loss value, and the third loss value, to obtain the motion state estimation model on which training is completed.

7. The method according to claim 6, wherein the determining (4042) a second loss value based on the first predicted motion state, the second predicted motion state, and a physical kinematic rule comprises:
determining a physical motion state at the third moment based on the first predicted motion state and the physical kinematic rule; and
determining the second loss value based on the physical motion state and the second predicted motion state.

8. The method according to claim 6, wherein the determining (4041) a first loss value based on the first predicted motion state, the second predicted motion state, the first sample motion state ground truth, and the second sample motion state ground truth comprises:
determining a first sub-loss value based on the first predicted motion state and the first sample motion state ground truth;
determining a second sub-loss value based on the second predicted motion state and the second sample motion state ground truth; and
determining the first loss value based on the first sub-loss value and the second sub-loss value.

9. An apparatus for motion state estimation, **characterized by** comprising:
a first determination module (601), configured for determining first distances between an ego vehicle and a target object at a plurality of historical moments;
a second determination module (602), configured for determining, based on perception data of the ego vehicle at a current moment, a second distance between the ego vehicle and the target object at the current moment;
a first fitting processing module (603), configured for performing fitting processing on the first distances and the second distance, to obtain motion states of the target object at the historical moments; and
a first motion state estimation module (604), configured for processing, based on a motion state estimation model, the motion states of the target object at the historical moments, to obtain a first estimation motion state of the target object at the current moment and a second estimation motion state of the target object at a future moment.

10. The apparatus according to claim 9, wherein the first fitting processing module (603) comprises:
a first fitting unit (6031), configured for performing first fitting processing on the first distances and the second distance, to obtain velocities of the target object at the historical moments;
a second fitting unit (6032), configured for performing second fitting processing on the velocities of the target object at the historical moments, to obtain accelerations of the target object at the historical moments; and
a first determination unit (6033), configured for determining, based on the first distances, the velocities of the target object at the historical moments and the accelerations of the target object at the historical moments, the motion states of the target object at the historical moments.

11. The apparatus according to claim 9 or 10, wherein the first motion state estimation module (604) comprises:
a first processing unit (6041), configured for processing, based on a temporal convolutional network in the motion state estimation model, the motion states of the target object at the historical moments, to obtain a motion feature of the target object; and
a second processing unit (6042), configured for processing, based on a motion state estimation network in the motion state estimation model, the motion feature, to obtain the first estimation motion state and the second estimation motion state of the target object.

12. The apparatus according to claim 11, wherein the second processing unit (6042) comprises:
a processing sub-unit (901), configured for processing, based on a decoder in the motion state estimation network, the motion feature, to obtain the first estimation motion state and the second estimation motion state of the target object.

13. An apparatus for training a motion state estimation model, **characterized by** comprising:
a third determination module (1001), configured for determining a plurality of groups of sample data, wherein the group of sample data comprise a first sample distance between an ego vehicle and a target object at a first moment, second sample distances between the ego vehicle and the target object at a plurality of second moments, a first sample motion state ground truth of the target object at the first moment, and a second sample motion state ground truth of the target object at a third moment, wherein the second moments precede the first moment, and the third moment follows the first moment;
a second fitting processing module (1002), configured for performing fitting processing on the first sample distance and the second sample distances in the groups of sample data, to obtain sample motion states of the target object at the second moments;
a second motion state estimation module (1003), configured for processing, based on an initial motion state estimation model, the sample motion states of the target object at the second moments, to obtain a first predicted motion state of the target object at the first moment and a second predicted motion state of the target object at the third moment; and
a training module (1004), configured for performing, with the first predicted motion state and the second predicted motion state as an initial training output of the initial motion state estimation model and with the first sample motion state ground truth and the second sample motion state ground truth as supervision information, iterative training on the initial motion state estimation model to obtain a motion state estimation model on which training is completed.

14. A non-transitory computer readable storage medium, on which a computer program is stored, **characterized by** in that the computer program, when executed by a processor, to causes the processor to implement the method for motion state estimation according to any one of claims 1 to 4, or the method for training a motion state estimation model according to any one of claims 5 to 8.

15. An electronic device (140), **characterized by** comprising:
a processor (1401); and
a memory (1402), configured for storing processor-executable instructions, wherein
the processor (1401) is configured for reading the executable instructions from the memory (1402), and executing the executable instructions to implement the method for motion state estimation according to any one of claims 1 to 4, or the method for training a motion state estimation model according to any one of claims 5 to 8.
